# EUROPEAN PATENT APPLICATION

(11) **EP 4 435 929 A1**
(43) Date of publication of application: **25.09.2024**
(21) Application number: 23217115.7
(22) Date of filing: 15.12.2023
(51) Int. Cl.: H01M 10/48, H01M 10/42, B60L 53/80, H01M 50/569

(54) **BATTERY REPLACEMENT SYSTEM AND METHOD**

(30) Priority: 22.03.2023 KR 20230037526
(71) Applicant: Samsung SDI Co., Ltd., Yongin-si, Gyeonggi-do 17084 (KR)
(72) Inventor: KIM, Minsu, 17084 Yongin-si (KR)
(74) Representative: Marks & Clerk LLP

(57) **Abstract**

An embodiment provides a battery replacement system, including: an antenna module configured with a plurality of antennas; a camera; a first control device configured to generate position information of a first target battery module based on image data capturing a plurality of battery modules inside a battery pack through the camera and a beacon signal received from the first target battery module through the plurality of antennas; and a module replacement device configured to automatically replace the first target battery module with a new battery module based on the position information of the first target battery module.

## Description

### BACKGROUND OF THE DISCLOSURE

### (a) Field of the Disclosure

The present disclosure relates to a battery replacement system and method.

### (b) Description of the Related Art

A rechargeable or secondary battery differs from a primary battery in providing only irreversible conversion of chemical materials into electrical energy in that it can be charged and discharged repeatedly. Low-capacity rechargeable batteries are used as power supplies for small electronic devices such as mobile phones, notebook computers, and camcorders, while high-capacity rechargeable batteries are used as power supplies such as an energy storage system (ESS) or uninterruptible power supply (UPS) system using medium and large batteries used for electric vehicles (EVs), hybrid vehicles (HVs), or home or industry.

In general, the secondary battery includes an electrode assembly including a positive electrode, a negative electrode, and a separator interposed between the positive and negative electrodes; a case accommodating the electrode assembly; and an electrode terminal electrically connected to the electrode assembly. An electrolyte solution is injected into the case to enable charging and discharging of the battery through an electrochemical reaction between the positive electrode, the negative electrode, and the electrolyte solution. A shape of the case, such as a cylindrical or rectangular shape, depends on the purpose of the battery.

The rechargeable battery may be used as a battery module formed of a plurality of unit battery cells connected in series and/or parallel to provide high energy density, for example for driving a motor of a hybrid vehicle. That is, the battery module is formed by interconnecting electrode terminals of a plurality of unit battery cells according to an amount of power required to implement, for example, a high-power rechargeable battery for an electric vehicle. One or more battery modules are mechanically and electrically integrated to configure a battery pack.

In order to meet dynamic power demands of various electrical consumer devices connected to the battery pack, static control of battery power output and charging is not sufficient. Accordingly, information must be constantly or intermittently exchanged between the battery pack and the controllers of the electrical consumer devices. This information includes actual state of charge (SOC), potential electrical performance, charging capability, and internal resistance of the battery pack as well as actual or projected power demand or consumer surplus of the battery pack.

For monitoring, control, and/or setting of the aforementioned parameters, the battery pack includes control electronics. These control electronics may be essential components of the battery pack, may be disposed in a common housing, or may be a part of a remote control unit that communicates with the battery pack through an appropriate communication bus. These control electronics may perform various functions in the battery pack.

The control electronics of the battery pack, for example, a battery system manager (BSM), a battery management system (BMS), a battery monitoring unit (BMU), or a system basis chip (SBC) may be powered by the battery pack controlled by them. In this way, an additional power source for the control electronics may be omitted, reducing the installation space requirement of the battery pack. However, depending on the output voltage of the battery pack, for example, a high voltage battery pack such as 48 V requires adjustment of the output voltage to supply power to the control electronics.

The battery module has a limited cycle-life due to deterioration, and may be placed in an unusable state due to a failure. Conventionally, when the cycle-life of the battery module is exhausted or the battery module is out of order, the battery module has been replaced in such a way that the entire battery pack is replaced regardless of the number of battery modules of which cycle-life is exhausted or that are out of order. This method is very economically inefficient because a normal battery module is also replaced.

### SUMMARY OF THE DISCLOSRE

Embodiments are to provide a battery replacement system and method that may automatically identify and replace only defective battery modules.

An embodiment provides a battery replacement system, including: an antenna module configured with a plurality of antennas; a camera; a first control device configured to generate position information of a first target battery module based on image data capturing a plurality of battery modules inside a battery pack through the camera and a beacon signal received from the first target battery module through the plurality of antennas; and a module replacement device configured to automatically replace the first target battery module with a new battery module based on the position information of the first target battery module.

The first control device may be further configured to detect a plurality of module areas corresponding to the plurality of battery modules from the image data, to determine a module area of the first target battery module among the plurality of module areas based on the beacon signal, and to generate the position information of the first target battery module to include module area information of the first target battery module and identification information extracted from the beacon signal.

The first control device may be further configured to determine the module area of the first target battery module among the plurality of module areas based on received signal strength of each of the plurality of antennas for the beacon signal.

The antenna module may be configured to sequentially receive beacon signals transmitted from the plurality of battery modules through the plurality of antennas. The first control device may be further configured to generate position information of each of the plurality of battery modules based on the image data and a beacon signal received through the plurality of antennas.

The first control device may be further configured to determine a battery module not transmitting a beacon signal among the plurality of battery modules as a second target battery module, and to generate position information of the second target battery module based on the image data. The module replacement device may be further configured to automatically replace the second target battery module with a new battery module based on the position information of the second target battery module.

The first control device may be further configured to determine, among the plurality of battery modules, a battery module whose corresponding module area is not determined by the beacon signal received through the plurality of antennas as a battery module not transmitting a beacon signal.

The battery replacement system may further include a second control device configured to receive information on a battery module to be replaced from the battery pack, and to receive position information of the plurality of battery modules from the first control device. The second control device may be further configured to select the first target battery module among the plurality of battery modules based on the information on the battery module to be replaced, and to transmit position information of the first target battery module to the module replacement device.

The first control device may be further configured to select the first target battery module among the plurality of battery modules based on the information on the battery module to be replaced, and to transmit position information of the first target battery module to the module replacement device.

The position information of the first target battery module may include module area information of the first target battery module and identification information of the first target battery module that is detected from the beacon signal.

The module replacement device may be further configured to determine an operation path for replacing the first target battery module based on the position information of the first target battery module, and to replace the first target battery module with the new battery module based on the operation path.

Another embodiment provides a battery replacement method of a battery replacement system, including: obtaining image data by capturing a plurality of battery modules inside a battery pack through a camera; receiving a beacon signal from a first target battery module among the plurality of battery modules through an antenna module configured with a plurality of antennas; generating position information of the first target battery module based on the image data and the beacon signal; and automatically replacing the first target battery module with a new battery module based on the position information of the first target battery module.

The generating of the position information may include detecting a plurality of module areas corresponding to the plurality of battery modules from the image data, determining a module area of the first target battery module from among the plurality of module areas based on the beacon signal, and generating position information of the first target battery module to include module area information of the first target battery module and identification information extracted from the beacon signal.

The determining of the module area of the first target battery module may include determining a module area of the first target battery module among the plurality of module areas based on received signal strength of each of the plurality of antennas for the beacon signal.

The battery replacement method may further include receiving beacon signals sequentially transmitted from the plurality of battery modules through the plurality of antennas, determining a battery module not transmitting a beacon signal among the plurality of battery modules as a second target battery module, generating position information of the second target battery module based on the image data, and automatically replacing the second target battery module with a new battery module based on the position information of the second target battery module.

The determining of the second target battery module may include determining, among the plurality of battery modules, a battery module whose corresponding module area is not determined by a beacon signal received through the plurality of antennas as the second target module.

The battery replacement method may further include receiving information on a battery module to be replaced from the battery pack, and determining the first target battery module among the plurality of battery modules based on the information on the battery module to be replaced.

The position information of the first target battery module may include module area information of the first target battery module and identification information of the first target battery module that is detected from the beacon signal.

The replacing may include determining an operation path for replacing the first target battery module based on the position information of the first target battery module, and replacing the first target battery module with the new battery module based on the operation path.

The battery replacement method may further include receiving a diagnostic result for the new battery module from the battery pack, and completing assembly of the battery pack when it is determined that the new battery module is normally replaced based on the diagnostic result.

The battery replacement method may further include detecting receiving of the battery pack at a replacement location, and performing an authentication process for battery module replacement by wirelessly communicating with the battery pack.

According to the embodiments, by automatically identifying and replacing only defective battery modules, it is possible to improve efficiency of battery module replacement work and to prevent unnecessary battery module replacement.

At least some of the above and other features of the invention are set out in the claims.

### BRIEF DESCRIPTION OF THE DRAWINGS

FIG. 1 schematically illustrates a battery replacement system according to an embodiment.
FIG. 2 illustrates a perspective view of an example of a module identification device according to an embodiment.
FIG. 3 illustrates a method of identifying a position of a battery module by a module identification device according to an embodiment.
FIG. 4 schematically illustrates a flowchart of a battery replacement method according to an embodiment.
FIG. 5 schematically illustrates a flowchart of a method for generating replacement map data according to an embodiment.
FIG. 6 schematically illustrates a flowchart of a method for generating replacement map data according to another embodiment.

### DETAILED DESCRIPTION OF THE EMBODIMENTS

Embodiments of the present disclosure will now be described in detail with accompanying drawings. Hereinafter, an operation effect and a method of implementing the same according to embodiments of the present disclosure will be described with reference to the accompanying drawings. In the drawings, the same reference numerals denote the same elements, and redundant explanations will be omitted. However, the present disclosure may be embodied in various forms, and should not be construed as being limited only to the embodiments shown herein. Rather, these embodiments are provided by way of example to make the present disclosure thorough and complete, and will fully convey aspects and features of the present disclosure to those skilled in the art.

Hence, for the purpose of complete understanding on the aspects and the characteristics of the present disclosure, processes, factors, and skills that may not be needed by a person of ordinary skill in the art may not be described. In the drawings, relative sizes of elements, layers, and regions may be exaggerated for clarity.

As used herein, the term "and/or" includes any and all combinations of one or more related listed items. The use of "can/may" in describing an embodiment of the present disclosure indicates "at least one embodiment of the present disclosure."

In the following description of embodiments of the present invention, terms in the singular form may include plural forms unless the context clearly indicates otherwise.

It will be understood that the terms "first", "second", "third", etc. are used to describe various elements, but these elements should not be limited by these terms. These terms are only used to distinguish one element from another. For example, a first constituent element may be referred to as a second constituent element, and the second constituent element may also be referred to as the first constituent element without departing from the scope of the present disclosure. As used herein, the term "and/or" includes any and all combinations of one or more related listed items. An expression such as "at least one" precedes a list of elements, modifying the entire list of elements and not individual elements of the list.

As used in this specification, the terms "substantially", "approximately", and similar terms are used as approximate terms but are not used as degree terms, and they are not intended to illustrate inherent deviations of measured or calculated values evident to those skilled in the art. In addition, when the term "substantially" is used in combination with a characteristic that can be expressed using numerical values, the term "substantially" refers to including a range of +/-5 % of the value.

It will be understood that when a constituent element or layer is referred to as being "on," "connected to," or "coupled to" another constituent element or layer, it can be directly on, connected to, or coupled to the other constituent element or layer, or one or more intervening constituent elements or layers may be present. In addition, it will also be understood that when a constituent element or layer is referred to as being "between" two constituent elements or layers, it can be the only constituent element or layer between the two constituent elements or layers, or one or more intervening constituent elements or layers may also be present.

Electrically connecting two constituent elements includes directly connecting two constituent elements and connecting the same with another constituent element therebetween. The other constituent element may include a switch, a resistor, and a capacitor. When the embodiments are described, an expression of connection signifies electrical connection when an expression of direct connection is not provided.

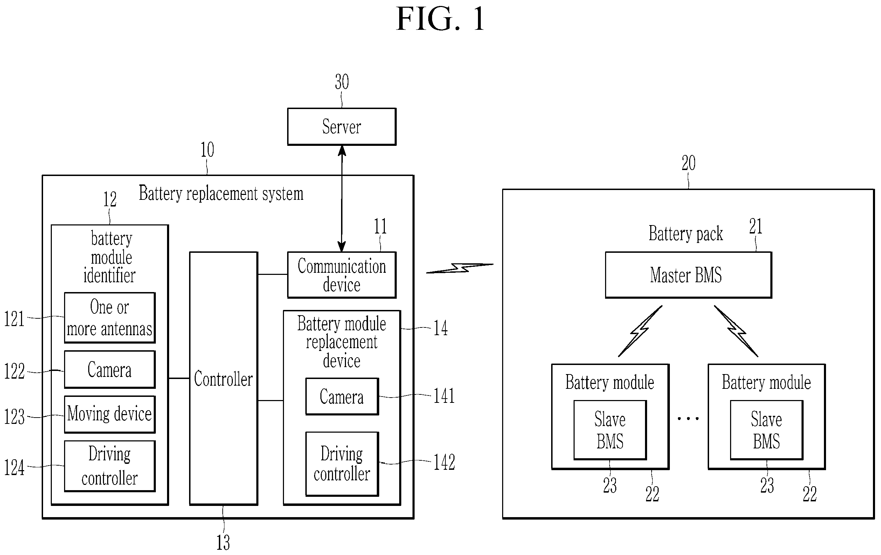

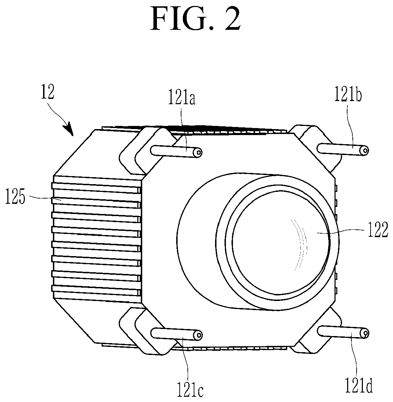

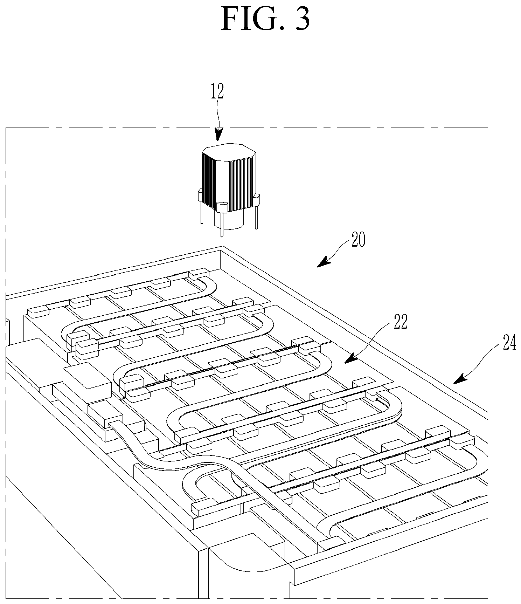

FIG. 1 schematically illustrates a battery replacement system according to an embodiment. In addition, FIG. 2 illustrates a perspective view of an example of a module identification device according to an embodiment, and FIG. 3 illustrates a method of identifying a position of a battery module by a module identification device according to an embodiment.

Referring to FIG. 1, a battery replacement system 10 according to an embodiment may include a communication device 11, a module identification device 12, a control device 13, and a module replacement device 14.

The communication device 11 may perform a wired/wireless communication function between the battery replacement system 10 and an external device (for example, a battery pack 20, a server 30, or an electronic device (not shown) in which the battery pack 20 is installed). For example, the communication device 11 may communicate with a master battery management system (BMS) of the battery pack 20 in a wireless communication method (for example, Wi-Fi, Bluetooth, Zigbee, and the like). In addition, for example, the communication device 11 may communicate with the server 30 in a wired or wireless communication method.

The module identification device 12 may identify a position of a battery module 22 from the battery pack 20 (hereinafter, referred to as a 'target battery pack') received in a replacement location. The module identification device 12 may include an antenna module 121, a camera 122, a moving device 123, and a driving control device 124.

The antenna module 121 may receive a beacon signal wirelessly transmitted from the target battery pack 20. The antenna module 121 may be a multi-channel antenna including a plurality of antennas that are spaced apart from each other. Referring to FIG. 2 as an example, the antenna module 121 may be a 4-channel antenna including four antennas 121a to 121d protruding in one direction from a body 125 of the module identification device 12. The four antennas 121a to 121d may be disposed to be spaced apart from each other.

The camera 122 may capture the battery modules 22 configuring the target battery pack 20 from an upper portion of the target battery pack 20. The battery pack 20 may include a plurality of battery modules 22 accommodated inside a housing 24. The camera 122 may obtain image data including image information about a disposition structure of the battery modules 22 configuring the target battery pack 20 by capturing the inside of the target battery pack 20. When the housing of the target battery pack 20 includes an upper cover, the camera 122 may capture the inside of the target battery pack 20 in a state in which the upper cover of the target battery pack 20 is removed so that the disposition structure of the battery modules 22 may be captured.

Referring back to FIG. 1, the moving device 123 may control the movement of the module identification device 12. For example, when the target battery pack 20 is received at a replacement location, the moving device 123 may control the movement of the module identification device 12 so that the module identification device 12 is disposed above the target battery pack 20 as shown in FIG. 3. In addition, after position information of the battery module 22 (hereinafter, referred to as 'target battery module'), which is a replacement target, is obtained from the target battery pack 20, the movement of the module identification device 12 may be controlled so that the module identification device 12 leaves the upper portion of the target battery pack 20 and moves to an initial position.

The moving device 123 may include a rail device that moves along a rail (not shown). The mobile device 123 may include a robot arm capable of multi-axis movement. In addition to this, various types of moving devices 123 may be used to move the body 125 of the module identification device 12 to which the antenna module 121 and the camera 122 are mounted to the upper portion of the battery pack 20.

When the antenna module 121 and the camera 122 are installed to be fixed to a specific position (for example, the upper portion of the target battery pack 20), the moving device 123 may be omitted.

The driving control device 124 may control an overall operation of the module identification device 12.

The driving control device 124 may control the movement of the module identification device 12 by controlling the driving of the moving device 123.

The driving control device 124 may control the antenna module 121 so that each antenna of the antenna module 121 receives a beacon signal transmitted from a slave BMS 23 of the battery pack 20.

The driving control device 124 may control the camera 122 to capture the disposition structure of the battery modules 22 configuring the target battery pack 20.

The driving control device 124 may detect position information of the battery module 22 that has transmitted the beacon signal based on the beacon signal received through the antenna module 121 and the image data of the target battery pack 20 captured by the camera 122.

When the beacon signal is received through the antenna module 121, the driving control device 124 may detect a position of a signal source (the slave BMS 23) that has transmitted a corresponding beacon signal based on a received signal strength difference between the antennas of the antenna module 121, and may generate position information corresponding to the detected position. Since a method of detecting a position of a signal source that transmitted a corresponding signal based on a signal strength of a signal received at different positions is a well-known technique in the field of position detection technology, a detailed description thereof will be omitted.

The driving control device 124 may receive image data obtained by capturing the battery modules 22 from the camera 122. Image data captured by the camera 122 may include image information on how each battery module 22 is disposed inside the battery pack 20. The driving control device 124 may identify each battery module 22 within image data through image recognition of the image data captured by the camera 122. That is, the drive control device 124 detects an area in which each battery module 22 is disposed (hereinafter, referred to as a 'module area') from image data of the target battery pack 20 captured by the camera 122. The driving control device 124 may generate module area information for each battery module 22 configuring the target battery pack 20 based on the detected module areas as described above. The module area information of each battery module 22 may include coordinate information about the area occupied by each battery module 22 in the image data.

The drive control device 124 may compare the module area information of each battery module 22 detected through the camera 122 and the position information of the slave BMS 23 detected through the antenna module 121 to obtain the position information of the battery module 22 that has transmitted the beacon signal.

Referring to FIG. 2, a relative position between each of the antennas 121a to 121d configuring the antenna module 121 and the camera 122 may remain fixed. Accordingly, the driving control device 124 may know in advance the relative positional relationship between each of the antennas 121a to 121d and the camera 122. In addition, the driving control device 124 may convert the position information of the slave BMS 23 detected through the antenna module 121 and the module area information of each battery module 22 detected through the camera 122 into coordinate information on the same virtual coordinate plane (or coordinate space). Accordingly, the driving control device 124, by comparing the position information of the slave BMS 23 detected through the antenna module 121 and the module area information of each battery module 22 detected through the camera 122 on the same coordinate plane (or coordinate space), may identify which battery module 22 includes the slave BMS 23 that transmitted the beacon signal.

When the position of the battery module 22 that transmitted the beacon signal is identified, the driving control device 124 may generate position information of the corresponding battery module 22 by using module area information of the corresponding battery module 22 and identification information (identification information of the corresponding battery module or slave BMS) detected from the beacon signal.

When the position information of the battery module 22 is generated, the driving control device 124 may transmit it to the control device 13. When transmitting the position information, the driving control device 124 may transmit the image data of the battery modules 22 captured through the camera 122 to the control device 13 together with the position information.

The control device 13 may manage and control the overall operation of the battery replacement system 10.

The control device 13 may detect receiving of the target battery pack 20 at a replacement location. The control device 13 may detect the receiving of the target battery pack 20 at a replacement location based on a control input from an operator or a user. The control device 13 may automatically detect the receiving of the target battery pack 20 at a replacement location through image recognition. The control device 13 may automatically detect the receiving of the target battery pack 20 at the replacement location through a predetermined sensor such as a pressure sensor, a weight sensor, and an optical sensor. The control device 13 may automatically detect the receiving of the target battery pack 20 at the replacement location through wireless communication with an electronic device such as an electric vehicle or the like in which the target battery pack 20 is received.

The control device 13 may communicate with the server 30 and the target battery pack 20 to perform authentication of the target battery pack 20 received in the replacement location. The control device 13 may receive authentication information from the target battery pack 20 through wireless communication. The authentication information received from the target battery pack 20 may include identification information of the target battery pack 20, identification information of the master BMS 21 included in the target battery pack 20, and the like. When the authentication information is received from the target battery pack 20, the control device 13 may request authentication of the target battery pack 20 by transmitting it to the server 30.

The server 30 may store and manage information about battery packs registered in the server 30. The battery pack information stored in the server 30 may include identification information of each battery pack, identification information of the master BMS mounted on each battery pack, identification information of battery modules included in each battery pack, replacement history information for each battery pack (replacement date, replacement location, identification information of a new battery module replaced, reason for replacement, and the like), and warranty information (free replacement period and the like). When the authentication information of the target battery pack 20 is received from the battery replacement system 10, the server 30 may perform an authentication procedure on the target battery pack 20 based on the received authentication information and battery pack information stored in the server 30. For example, the server 30 may check whether the corresponding target battery pack 20 is registered in the server 30 based on the received authentication information of the target battery pack 20 to check whether the target battery pack 20 is genuine. In addition, for example, the server 30 may check quality assurance information of the corresponding battery pack based on the received authentication information of the target battery pack 20 to check whether the target battery pack 20 is subject to battery module replacement. When the authentication process for the target battery pack 20 is completed, the server 30 may transmit an authentication result to the battery replacement system 10.

In order to prevent illegal access to the battery pack 20, an authentication process for the battery replacement system 10 may be performed by the target battery pack 20. To this end, when the authentication of the target battery pack 20 is successful, the control device 13 of the battery replacement system 10 may transmit an authentication code (for example, a one time password (OTP)) to the master BMS 21 of the target battery pack 20. The master BMS 21 receiving the authentication code may perform an authentication process for the battery replacement system 10 by using the received authentication code. When the authentication of the battery replacement system 10 is successful, the master BMS 21 may permit the battery replacement system 10 to access the target battery pack 20. That is, only when the authentication of the battery replacement system 10 is successful, the master BMS 21 may control the slave BMS 23 so that information on the target battery pack 20 (for example, information on a defective battery module to be replaced) may be transmitted to the battery replacement system 10 or a beacon signal for identifying a defective battery module may be transmitted.

When the authentication of the target battery pack 20 is successfully completed, the control device 13 may operate the module identification device 12 to obtain position information of a target battery module to be replaced in the target battery pack 20.

When the authentication process is successfully completed, the master BMS 21 of the target battery pack 20 may enter a replacement mode to transmit information (for example, the number of battery modules 22 configuring (e.g. forming) the target battery pack 20, identification information of each battery module 22 (identification information of the battery module 22 or the slave BMS 23 included therein), specification information, and the like) of each battery module 22 configuring the target battery pack 20 to the battery replacement system 10. In addition, the master BMS 21 may transmit information (for example, the number of defective battery modules, identification information of the defective battery module (identification information of the corresponding battery module 22 or the slave BMS 23 included therein), error code, and state information (voltage, current, temperature, and the like) on the defective battery module to the battery replacement system 10. Here, the error code is an identification code indicating a defect factor of the corresponding battery module 22.

In addition, the master BMS 21 may control the slave BMS 23 so that the slave BMS 23 of each battery module 22 sequentially transmits beacon signals.

Whenever each slave BMS 23 of the target battery pack 20 transmits a beacon signal, the control device 13 of the battery replacement system 10 may use the module identification device 12 to obtain position information of the corresponding battery module 22. When the position information of each battery module 22 is obtained in this way, the control device 13 may determine (e.g. select) a target battery module among the battery modules 22 whose position is identified based on the information on the defective battery module received from the target battery pack 20.

The battery module 22 needs to be replaced not only when the battery cells configuring the battery module 22 are defective, but also when the slave BMS 23 mounted on the battery module 22 is defective. When the slave BMS 23 is defective, the slave BMS 23 cannot normally transmit a beacon signal. Accordingly, the control device 13 may determine the battery module 22 in which transmission of the beacon signal is not detected among the battery modules for which module area information is detected through the camera 122 as the target battery module. In this case, based on the information received from the target battery pack 20, the control device 13 may determine the identification information of the battery module that is determined to have not transmitted a beacon signal among the battery modules 22 configuring the target battery pack 20 as identification information of the target battery module, and may generate position information to include the identification information determined in this way and the module area information of the target battery module obtained through the camera 122.

Meanwhile, the master BMS 21 of the target battery pack 20 may control the slave BMSs 23 to transmit a beacon signal only to the defective battery modules in order to reduce power consumption. That is, after entering the replacement mode, the master BMS 21 may control the corresponding slave BMSs 23 so that the slave BMS 23 of the defective battery module sequentially transmits a beacon signal. In this case, whenever he slave BMS 23 of the defective battery module included in the target battery pack 20 transmits a beacon signal, the control device 13 of the battery replacement system 10 may use the module identification device 12 to obtain position information of the target battery module.

When the target battery module is identified through the module identification device 12, the control device 13 may compare the information of the defective battery module received from the target battery pack 20 with the identification information of the target battery module detected from the beacon signal to verify the target battery module detected through the module identification device 12. That is, the control device 13 may verify whether the battery module identified as the target battery module by the module identification device 12 is a defective battery module.

The control device 13 may also check whether there is a battery module that has not transmitted a beacon signal among battery modules notified as defective battery modules from the target battery pack 20 based on the received information on the defective battery module. When there is a battery module that has not transmitted a beacon signal among battery modules notified as the defective battery modules from the target battery pack 20, the control device 13 may notify the master BMS 21 of this. The master BMS 21 notified of this may control the slave BMSs 23 so that the slave BMS 23 of each battery module 22 sequentially transmits a beacon signal. The control device 13 may identify the position of the corresponding battery module 22 by using the module identification device 12 whenever each slave BMS 23 transmits a beacon signal. In addition, the control device 13 may detect the battery module 22 that has not transmitted a beacon signal among the battery modules 22 for which module area information is obtained through the camera 122 based on the position of each battery module 22 identified in this way, and may determine it as target battery modules. In this case, based on the information received from the target battery pack 20, the control device 13 may determine the identification information of the battery module that is determined to have not transmitted a beacon signal among the battery modules 22 configuring the target battery pack 20 as identification information of the target battery module, and may generate the position information to include the identification information determined in this way and the module area information of the target battery module obtained through the camera 122.

When the target battery module is determined in the above-described manner, the control device 13 may generate replacement map data to include the information to include the image data of the target battery pack 20 captured by the camera 122 and the position information indicating the module area of the target battery module within the corresponding image data. When the replacement map data is generated, the control device 13 may transmit it to the module replacement device 14. In addition, the module replacement device 14 may be operated so that the module replacement device 14 automatically replaces the target battery module with a new battery module based on the replacement map data.

The module replacement device 14 may receive the replacement map data from the control device 13, and may replace the target battery module with a new battery module based on this. The module replacement device 14 may include a camera 141 and a driving control device 142.

The camera 141 may capture the battery modules 22 configuring the target battery pack 20 from an upper portion of the target battery pack 20.

The driving control device 142 may control an overall operation of the module replacement device 14.

The driving control device 142 may control the camera 141 to capture the disposition structure of the battery modules 22 configuring the target battery pack 20.

The driving control device 142 may receive image data obtained by capturing the battery modules 22 of the target battery pack 20 from the camera 141. The image data captured by the camera 141 may include image information on how each battery module 22 is disposed inside the battery pack 20. The driving control device 142 may detect a module area (or disposition shape) occupied by each battery module 22 in image data through image recognition of the image data captured by the camera 141. The driving control device 142 may generate module area information of each battery module 22 based on the detected module area of each battery module 22.

When the replacement map data is received from the control device 13, the driving control device 142 may determine an operation path for battery module replacement operation, based on the module area information of each battery module 22 obtained through the camera 141 and the received replacement map data. In addition, the driving control device 142 may perform a replacement operation of replacing the target battery module inside the target battery pack 20 with a new battery module based on the determined operation path.

The module replacement device 14 is a device capable of automatically attaching and detaching the battery module 22 to and from the battery pack 20, and may be configured in the form of a robot arm or a jig.

When the replacement of the defective battery module is completed by the module replacement device 14, the control device 13 may transmit identification information of a battery module newly installed in the target battery pack 20 to the master BMS 21 of the target battery pack 20. When information of the new battery module is received from the battery replacement system 10, the master BMS 21 of the target battery pack 20 may store it in an internal memory for management of the battery module 22.

In addition, the master BMS 21 of the target battery pack 20 may perform a diagnosis process to check whether the battery module is normally replaced. For example, the master BMS 21 may verify whether the information of the new battery module received from the battery replacement system 10 through communication with the slave BMS of the new battery module matches the information of the actually installed battery module. In addition, for example, the master BMS 21 may detect state values (a voltage, a current, a temperature, and the like) of the new battery module, and may verify whether the new battery module normally operates based on the detected state values. When the diagnosis process is successfully completed, the master BMS 21 may notify the battery replacement system 10 of the diagnosis result.

When the diagnosis of the new battery module is successfully completed, the control device 13 may control the module replacement device 14 to complete assembly of the target battery pack 20. In addition, the control device 13 may transmit information about battery module replacement details (replacement date, identification information of defective battery module and new battery module, reason for replacement, and the like) of the target battery pack 20 to the server 30. When the battery module replacement details of the target battery pack 20 are received from the battery replacement system 10, the server 30 may update replacement history information of a corresponding battery pack based on the received battery module replacement details.

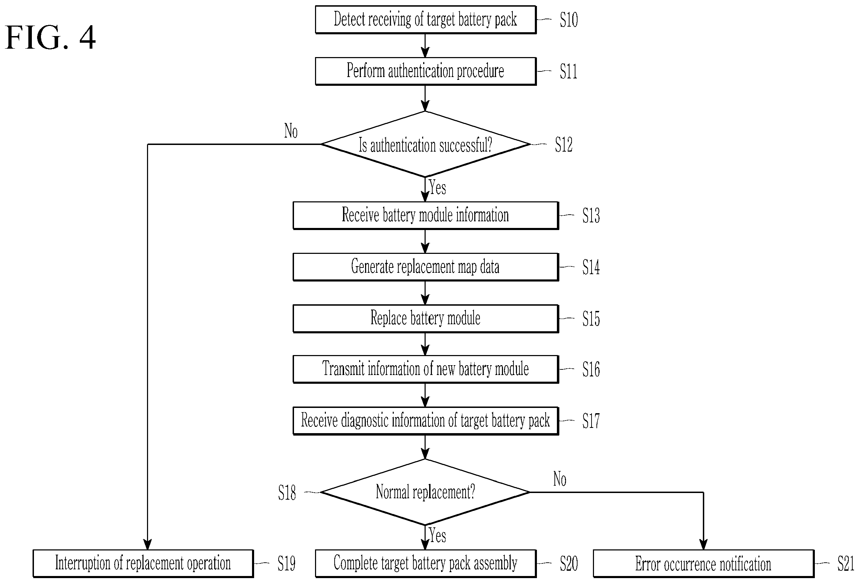

Hereinafter, a battery replacement method of the battery replacement system 10 according to the embodiment will be described in detail with reference to FIG. 4 to FIG. 6. The methods described below may be performed by the battery replacement system 10 described with reference to FIG. 1 to FIG. 3.

FIG. 4 schematically illustrates a flowchart of a battery replacement method according to an embodiment.

Referring to FIG. 4, the battery replacement system 10 may detect the receiving of the target battery pack 20 at the replacement location (S10).

In step S10, the battery replacement system 10 may detect the receiving of the target battery pack 20 at a replacement location based on a control input from an operator or a user. The battery replacement system 10 may automatically detect the receiving of the target battery pack 20 at a replacement location through image recognition. In addition, the battery replacement system 10 may automatically detect the receiving of the target battery pack 20 at the replacement location through a predetermined sensor such as a pressure sensor, a weight sensor, and an optical sensor. In addition, the battery replacement system 10 may automatically detect the receiving of the target battery pack 20 at the replacement location through wireless communication with an electronic device such as an electric vehicle or the like in which the target battery pack 20 is received.

As the target battery pack 20 is received at the replacement location, the battery replacement system 10 may communicate with the target battery pack 20 and the server 30 to perform an authentication procedure for the target battery pack 20 (S 11).

In step S11, the battery replacement system 10 may receive authentication information from the target battery pack 20 through wireless communication, and may transmit it to the server 30 to request authentication of the target battery pack 20. Upon receiving this, the server 30 performs an authentication procedure on the target battery pack 20 based on the authentication information of the target battery pack 20 and information on the battery packs registered in the server 30, and may transmit the authentication result to the battery replacement system 10.

In step S11, the battery replacement system 10 may request authentication by transmitting an authentication code (for example, OTP) for authentication to the master BMS 21 of the target battery pack 20. Upon receiving this, the master BMS 21 may perform an authentication procedure by using the received authentication code, and may transmit the authentication result to the battery replacement system 10. In addition, when authentication is successful, access of the battery replacement system 10 to the target battery pack 20 may be allowed.

When the authentication in step S11 is not successful (S12), the battery replacement system 10 may stop (interrupt) a battery module replacement operation for the target battery pack 20 (S19), and may transmit authentication failure information to the operator.

On the other hand, when the authentication in step S11 is successful (S12), the battery replacement system 10 may receive battery module information from the master BMS 21 of the target battery pack 20 through wireless communication (S13). The battery module information received in step S13 may include information on the battery module 22 configuring the target battery pack 20 (for example, the number of battery modules 22 configuring the target battery pack 20, identification information of each battery module 22 (identification information of the battery module 22 or the slave BMS 23 included therein), specification information, and the like). The battery module information received in step S13 may include information on the defective battery module (for example, the number of defective battery modules, identification information of the defective battery module (identification information of the corresponding battery module 22 or the slave BMS 23 included therein), error code, and state information (voltage, current, temperature, and the like).

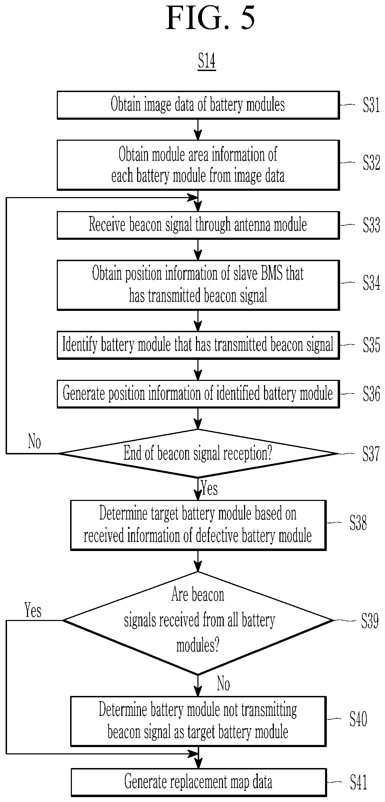

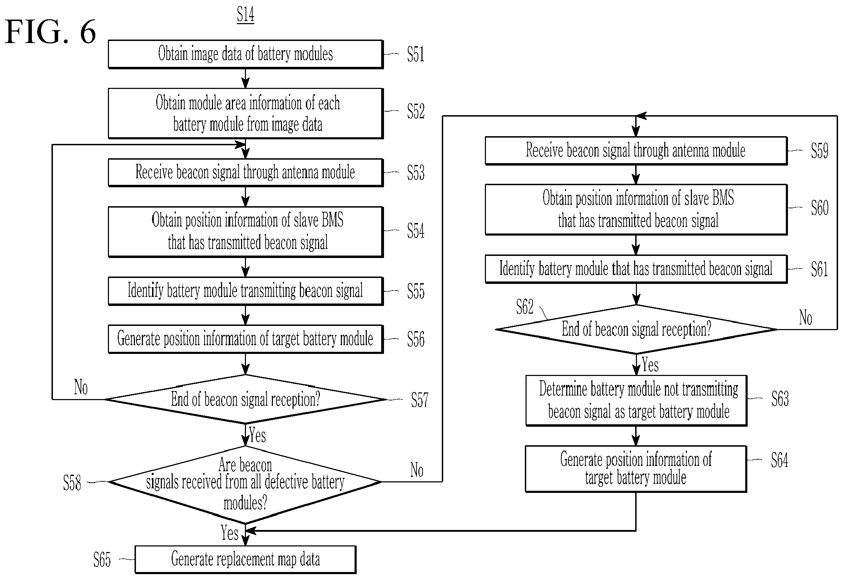

The battery replacement system 10 may also operate the module identification device 12 to obtain position information of the target battery module to be replaced, and may generate replacement map data to include it (S14). A method for generating the replacement map data will be described in detail with reference to FIG. 5 and FIG. 6.

When the replacement map data is obtained, the battery replacement system 10 may automatically replace the target battery module with a new battery module by operating the module replacement device 14 based on the replacement map data (S15). When the replacement operation is completed, the battery replacement system 10 may transmit information (identification information of battery module or slave BMS) on a new battery module newly installed in the target battery pack 20 to the master BMS 21 of the target battery pack 20 (S16).

The master BMS 21 of the target battery pack 20 receiving the information on the new battery module from the battery replacement system 10 may perform a diagnosis process to confirm whether the battery module is normally replaced. In addition, the master BMS 21 may transmit diagnostic information including a diagnostic result to the battery replacement system 10 (S17).

When it is determined that the battery module has been normally replaced based on the received diagnostic information (S18), the battery replacement system 10 may complete the assembly of the target battery pack 20 (S20). On the other hand, when it is determined that the replacement operation has not been performed normally, the battery replacement system 10 may notify the operator that an error has occurred in the replacement operation (S21).

FIG. 5 schematically illustrates a flowchart of a method for generating replacement map data according to an embodiment.

Referring to FIG. 5, the battery replacement system 10 may obtain image data of the battery modules 22 inside the target battery pack 20 through the camera 122 (S31). The image data obtained through step S31 may include image information about the disposition structure of the battery modules 22. Accordingly, the battery replacement system 10 may detect module area information of each battery module from the image data obtained through step S31 (S32). In step S32, the module area information of each battery module 22 detected from the image data may include coordinate information corresponding to a disposition position and a disposition shape of each battery module 22 in the image data.

The master BMS 21 of the target battery pack 20 that has successfully authenticated with the battery replacement system 10 may control the slave BMSs 23 so that the slave BMS 23 of each battery module 22 sequentially transmits beacon signals. Accordingly, the battery replacement system 10 may receive the beacon signal transmitted from the slave BMS 23 through the antenna module 121 (S33).

When the beacon signal is received, the battery replacement system 10 may obtain position information of the slave BMS 23 that has transmitted the beacon signal based on the received signal strength from each antenna configuring the antenna module 121 (S34). In addition, the battery replacement system 10 may compare the module area information of each battery module 22 obtained through the camera 122 and the position information of the slave BMS 23 obtained through the antenna module 121 to identify which of the battery modules 22 configuring the target battery pack 20 has transmitted the beacon signal (S35). When the battery module transmitting the beacon signal is identified, the battery replacement system 10 may generate position information to include the module area information obtained through step S32 and the identification information obtained from the beacon signal for the identified battery module (S36).

The aforementioned step S33 to step S36 may be repeatedly performed whenever the beacon signal transmitted from the target battery pack 20 is received by the battery replacement system 10.

When the beacon signal reception from the target battery pack 20 ends (S37), that is, when no beacon signal is received from the target battery pack 20 for a predetermined period of time or longer, the battery replacement system 10 may determine a target battery module among battery modules whose position information is identified through the module identification device 12 based on the information on the defective battery module received from the target battery pack 20 (S38). That is, the battery replacement system 10 may compare the identification information included in the position information of each battery module with the identification information of the defective battery module received from the target battery pack 20 to determine a target battery module among battery modules whose position information is identified through the module identification device 12 (S38).

Meanwhile, the battery replacement system 10 may check whether beacon signals are received from all battery modules configuring the target battery pack 20 (S39). For example, when the number of battery modules included in the information received from the target battery pack 20 and the number of identification information obtained from the beacon signal are different, the battery replacement system 10 may determine that a beacon signal has not been received from some of the battery modules.

When it is determined that the beacon signal is not received from some of the battery modules 22, the battery replacement system 10 may detect a battery module that is determined to not transmit a beacon signal to determine it as a target battery module (S40). For example, the battery replacement system 10 may detect a battery module for which position information is not generated by a received beacon signal among battery modules whose module area is identified from image data, and may determine the battery module as a target battery module.

When the target battery module is determined, the battery replacement system 10 may generate replacement map data including position information of the target battery module and image data captured by the camera 122 (S41).

FIG. 6 schematically illustrates a flowchart of a method for generating replacement map data according to another embodiment. In the following description, among steps of FIG. 6, detailed descriptions of steps performed in the same manner as the method for generating the replacement map data described with reference to FIG. 5 will be omitted.

Referring to FIG. 6, the battery replacement system 10 may obtain image data of the battery modules 22 inside the target battery pack 20 through the camera 122 (S51). In addition, the battery replacement system 10 may detect module area information of each battery module from the image data (S52).

The master BMS 21 of the target battery pack 20 may control the slave BMSs 23 so that the slave BMS 23 of the defective battery module sequentially transmit beacon signals. Accordingly, the battery replacement system 10 may receive the beacon signal transmitted from the slave BMS 23 of the defective battery module through the antenna module 121 (S53).

When the beacon signal is received, the battery replacement system 10 may obtain position information of the slave BMS 23 that has transmitted the beacon signal based on the received signal strength from each antenna configuring the antenna module 121 (S54). In addition, the battery replacement system 10 may compare the module area information of each battery module 22 obtained through the camera 122 and the position information of the slave BMS 23 obtained through the antenna module 121 to identify which of the battery modules 22 configuring the target battery pack 20 has transmitted the beacon signal (S55). When the battery module transmitting the beacon signal is identified, the battery replacement system 10 may determine the identified battery module as a target battery module, and may generate position information of the target battery module (S56).

The aforementioned step S53 to step S56 may be repeatedly performed whenever the beacon signal transmitted from the target battery pack 20 is received by the battery replacement system 10.

When the beacon signal reception from the target battery pack 20 ends (S57), that is, when no beacon signal is received from the target battery pack 20 for a predetermined period of time or longer, the battery replacement system 10 may check whether beacon signals are received from all defective battery modules of the target battery pack 20 based on the information on the defective battery module received from the target battery pack 20 (S58). For example, when the number of defective battery modules included in the information received from the target battery pack 20 and the number of identification information obtained from the beacon signal are different, the battery replacement system 10 may determine that a beacon signal has not been received from some of the defective battery modules.

When it is determined that the beacon signal is not received from some of the defective battery modules, the battery replacement system 10 may notify the master BMS 21 of this. The master BMS 21 notified of this may control the slave BMSs 23 so that the slave BMS 23 of each battery module 22 sequentially transmits a beacon signal. Accordingly, the battery replacement system 10 may receive the beacon signal transmitted from the slave BMS 23 through the antenna module 121 (S59).

When the beacon signal is received, the battery replacement system 10 may obtain position information of the slave BMS 23 that has transmitted the beacon signal based on the received signal strength from each antenna configuring the antenna module 121 (S60). In addition, the battery replacement system 10 may compare the module area information of each battery module 22 obtained through the camera 122 and the position information of the slave BMS 23 obtained through the antenna module 121 to identify which of the battery modules 22 configuring the target battery pack 20 has transmitted the beacon signal (S61).

The aforementioned step S59 to step S61 may be repeatedly performed whenever the beacon signal transmitted from the target battery pack 20 is received by the battery replacement system 10.

When the beacon signal reception from the target battery pack 20 is terminated (S62), the battery replacement system 10 detects a battery module determined to have not transmitted a beacon signal to determine it as a target battery module (S63), and it may generate position information of the target battery module (S64). For example, the battery replacement system 10 may detect a battery module that is not identified as having transmitted a beacon signal among battery modules whose module area is identified from image data, and may determine it as a target battery module.

When the position information of the target battery module is generated through step S56 and step S64, the battery replacement system 10 may generate replacement map data including the generated position information of the target battery module and the image data captured by the camera 122 (S65).

According to the above-described embodiments, when the battery module of the battery pack 20 needs to be replaced, the processes in which the battery pack 20 is received, the defective battery module is replaced with a new battery module, and then the battery pack 20 is reassembled may be automated. In addition, when some of the battery modules of the battery pack 20 are defective, only defective battery modules may be automatically replaced without replacing the battery pack itself, thereby reducing replacement cost and preventing resource waste.

Meanwhile, in the above-described embodiment, the case in which after the driving control device 124 of the module identification device 12 obtains the position information of the battery module 22, the obtained position information of the battery module 22 is transmitted to the control device 13 has been described, but the embodiment is not limited thereto. In another embodiment, a function of obtaining position information of the battery module 22 may be performed by the control device 13. For example, the driving control device 124 may transmit signal strength information of a beacon signal received through each antenna of the antenna module 121 and image data captured by the camera 122 to the control device 13, and the control device 13 may obtain position information of the battery module 22 based on this in the above-described manner.

Electronic or electrical devices according to the embodiments and/or other related devices or constituent elements may be realized by using appropriate hardware, firmware (e.g., an application-specific integrated circuit), software, or combinations of software, firmware, and hardware. For example, various configurations of the above-noted devices may be positioned on one integrated circuit (IC) chip or an individual IC chip. In addition, various configurations of the above-noted devices may be realized on a flexible printed circuit film, a tape carrier package (TCP), a printed circuit board (PCB), or one substrate. The electrical or mutual connections described in the present specification may, for example, be realized by the PCB, wires on different types of circuit carriers, or conductive elements. The conductive elements may, for example, include metallization such as surface metallization and/or pins, and may include conductive polymers or ceramics. Further, electrical energy may be transmitted by electromagnetic radiation or by a light-using radio access.

In addition, the various configurations of the devices may be performed by at least one processor so as to perform the above-described various functions, they may be performed in at least one computing device, and they may be processes or threads for performing computer program instructions and interacting with other system constituent elements. The computer program instruction is received in a memory realizable in a computing device using a standard memory device such as a random access memory (RAM). The computer program instruction may also be received in a non-transitory computer-readable medium such as a CD-ROM or a flash drive.

Further, a person of ordinary skill in the art must understand that various functions of the computing device may be combined or united to a single computing device, or functions of a specific computing device may be dispersed to at least another computing device while not digressing from the range of the embodiments of the present invention.

While the embodiment of the present disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

### <Description of symbols>

10: battery replacement system
11: communication device
12: module identification device
121: antenna module
122: camera of module identification device
123: moving device
124: driving control device of module identification device
13: control device
14: module replacement device
141: camera of module replacement device
142: driving control device for module replacement device
20: battery pack
21: master BMS
22: battery module
23: slave BMS
30: server

## Claims

1. A battery replacement system, comprising:
an antenna module configured with a plurality of antennas;
a camera;
a first control device configured to generate position information of a first target battery module based on image data capturing a plurality of battery modules inside a battery pack through the camera and a beacon signal received from the first target battery module through the plurality of antennas; and
a module replacement device configured to automatically replace the first target battery module with a new battery module based on the position information of the first target battery module.

2. The battery replacement system of claim 1, wherein
the first control device is further configured to detect a plurality of module areas corresponding to the plurality of battery modules from the image data, to determine a module area of the first target battery module among the plurality of module areas based on the beacon signal, and to generate the position information of the first target battery module to include module area information of the first target battery module and identification information extracted from the beacon signal.

3. The battery replacement system of claim 2, wherein
the first control device is further configured to determine the module area of the first target battery module among the plurality of module areas based on received signal strength of each of the plurality of antennas for the beacon signal.

4. The battery replacement system of any preceding claim, wherein
the antenna module sequentially is configured to receive beacon signals transmitted from the plurality of battery modules through the plurality of antennas, and
the first control device is further configured to generate position information of each of the plurality of battery modules based on the image data and a beacon signal received through the plurality of antennas;
and wherein optionally
the first control device is further configured to determine a battery module not transmitting a beacon signal among the plurality of battery modules as a second target battery module, and to generate position information of the second target battery module based on the image data; and
the module replacement device is further configured to automatically replace the second target battery module with a new battery module based on the position information of the second target battery module.

5. The battery replacement system of claim 4, wherein
the first control device is further configured to determine among the plurality of battery modules, a battery module whose corresponding module area is not determined by the beacon signal received through the plurality of antennas as a battery module not transmitting a beacon signal.

6. The battery replacement system of claim 4 or 5, further comprising:
a second control device configured to receive information on a battery module to be replaced from the battery pack, and to receive position information of the plurality of battery modules from the first control device,
wherein the second control device is further configured to select the first target battery module among the plurality of battery modules based on the information on the battery module to be replaced, and to transmit position information of the first target battery module to the module replacement device.

7. The battery replacement system of any of claims 4 to 6, wherein
the first control device is further configured to select the first target battery module among the plurality of battery modules based on the information on the battery module to be replaced, and to transmit position information of the first target battery module to the module replacement device.

8. The battery replacement system of any preceding claim, wherein
the position information of the first target battery module includes module area information of the first target battery module and identification information of the first target battery module detected from the beacon signal;
and/or wherein
the module replacement device is further configured to determine an operation path for replacing the first target battery module based on the position information of the first target battery module, and to replace the first target battery module with the new battery module based on the operation path.

9. A battery replacement method of a battery replacement system, comprising:
obtaining image data by capturing a plurality of battery modules inside a battery pack through a camera;
receiving a beacon signal from a first target battery module among the plurality of battery modules through an antenna module configured with a plurality of antennas;
generating position information of the first target battery module based on the image data and the beacon signal; and
automatically replacing the first target battery module with a new battery module based on the position information of the first target battery module.

10. The battery replacement method of claim 9, wherein
the generating of the position information includes
detecting a plurality of module areas corresponding to the plurality of battery modules from the image data,
determining a module area of the first target battery module from among the plurality of module areas based on the beacon signal, and
generating position information of the first target battery module to include module area information of the first target battery module and identification information extracted from the beacon signal;
wherein optionally
the determining of the module area of the first target battery module includes
determining a module area of the first target battery module among the plurality of module areas based on received signal strength of each of the plurality of antennas for the beacon signal.

11. The battery replacement method of claim 10, further comprising
receiving beacon signals sequentially transmitted from the plurality of battery modules through the plurality of antennas,
determining a battery module not transmitting a beacon signal among the plurality of battery modules as a second target battery module,
generating position information of the second target battery module based on the image data, and
automatically replacing the second target battery module with a new battery module based on the position information of the second target battery module.

12. The battery replacement method of claim 11, wherein
the determining of the second target battery module includes
determining, among the plurality of battery modules, a battery module whose corresponding module area is not determined by a beacon signal received through the plurality of antennas as the second target module.

13. The battery replacement method of claim 10, 11, or 12, further comprising
receiving information on a battery module to be replaced from the battery pack, and
determining the first target battery module among the plurality of battery modules based on the information on the battery module to be replaced.

14. The battery replacement method of any of claims 9 to 13, wherein
the position information of the first target battery module includes module area information of the first target battery module and identification information of the first target battery module detected from the beacon signal; and/or wherein
the replacing includes
determining an operation path for replacing the first target battery module based on the position information of the first target battery module, and
replacing the first target battery module with the new battery module based on the operation path.

15. The battery replacement method of any of claims 9 to 14, further comprising
receiving a diagnostic result for the new battery module from the battery pack, and
completing assembly of the battery pack when it is determined that the new battery module is normally replaced based on the diagnostic result; and /or
detecting receiving of the battery pack at a replacement location, and
performing an authentication process for battery module replacement by wirelessly communicating with the battery pack.
